(19) Europäisches Patentamt
European Patent Office
Office européen des brevets

(11) Publication number: **0 265 791**
**A2**

(12) **EUROPEAN PATENT APPLICATION**

(21) Application number: **87115110.6**

(22) Date of filing: **16.10.87**

(51) Int. Cl.⁴: **C08L 69/00** ,
//(C08L69/00,67:00)

The title of the invention has been amended (Guidelines for Examination in the EPO, A-III, 7.3).

(30) Priority: **31.10.86 US 925679**

(43) Date of publication of application:
**04.05.88 Bulletin 88/18**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Boutni, Omar Mohamed**
**1232 Oriole Circle**
**Mt.Vernon Indiana 47620(US)**

(74) Representative: **Catherine, Alain et al**
**General Electric France Service de Propriété Industrielle 18 Rue Horace Vernet B.P. 76**
**F-92134 Issy-les-Moulineaux Cedex(FR)**

(54) **Polycarbonate and copolyester carbonate resin compositions exhibiting a high flexural modulus.**

(57) Thermoplastically moldable polycarbonate resins are improved by the blending therewith of a thermoplastically moldable liquid crystal.

EP 0 265 791 A2

# POLYCARBONATE AND COPOLYESTER-CARBONATE RESIN COMPOSITIONS EXHIBITING HIGH MODULUS

## BACKGROUND OF THE INVENTION

### Field of the Invention

The invention relates to synthetic polymeric resin compositions useful for thermoplastic molding and more particularly relates to moldable blends of aromatic polycarbonates and and copolyester-carbonate resins with polymeric liquid crystals.

## BRIEF DESCRIPTION OF THE PRIOR ART

Aromatic polycarbonate resins are a well known class of synthetic polymeric resins, generally prepared by the reaction of a polyhydric phenol with a carbonate precursor; see for example U.S. Patent 3,989,672. These resins, for the most part, are thermoplastic and readily molded under heat to fabricate a wide variety of articles such as automotive parts, tool housings and like structural components. The technique of molding and advantageous moldable compositions comprising the base polycarbonate in admixture with a wide variety of fillers, reinforcing agents, stabilizers, melt-viscosity modifiers, strength and impact modifiers, fire retardants, pigments and like additives are also well known. Representative of such moldable compositions are those described in the U.S. Patents 3,431,224 and 4,481,331.

A wide variety of copolyester-carbonate resins are also known in the prior art as is the method of their preparation; see for example U.S. Patent 4,487,896.

In spite of the numerous thermoplastic polycarbonate and copolyester-carbonate molding resin compositions known and available, there has remained a need for thermoplastic resin compositions meeting specific needs and from which articles of specific physical properties may be molded. For example, there is a need for polycarbonate resins and copolyester-carbonate resins having improved (higher) modulus properties and improved high temperature distortion characteristics.

The compositions of the present invention are moldable into articles which exhibit useful impact resistance properties, high modulus and improved high-temperature properties.

## SUMMARY OF THE INVENTION

The invention comprises a thermoplastic molding composition, which comprises;

a thermoplastic, aromatic polycarbonate or copolyester-carbonate resin; and

a polymeric, liquid crystal.

The invention also comprises articles thermoplastically molded from the resins of the invention, such as structural components of automobile vehicles, containers for food, tool housings and like articles. The compositions of the invention are particularly useful when formed into sheet materials, or injection molded and exhibit therein improved high temperature properties such as reduced distortion and tendency to curl when exposed to high temperatures. When combined with a relatively low quantity of glass fibers, the compositions demonstrate excellent flammability results.

## DETAILED DESCRIPTION OF THE PREFERRED EMBODIMENTS OF THE INVENTION

A wide variety of polycarbonate resins are known as are methods of their preparation, which are thermoplastically moldable. These polycarbonate resins may be prepared by the reaction of a polyhydric phenol with a carbonate precursor such as phosgene, a halo-formate or a carbonate ester. The method of preparation is described for example in U.S. Patents 4,001,184 and 4,474,999, both of which are herein incorporated by reference.

In general, the polycarbonate resins are typified as possessing recurring structural units of the formula:

$$-\!\!\left( O\text{-}A\text{-}O\text{-}\overset{O}{\overset{\|}{C}} \right)\!\!-$$

wherein A is a divalent aromatic moiety of the polyhydric phenol employed in the polymerization reaction. The dihydric phenols which may be employed to provide such aromatic carbonate polymers are mononuclear or polynuclear aromatic compounds, containing as functional groups two hydroxy radicals, each of which is attached directly to a carbon atom of an aromatic nucleus. Typical dihydric phenols are: 2,2-bis-(4-hydroxyphenyl)propane; hydroquinone; resorcinol; 2,2-bis-(4-hydroxyphenyl)pentane; 2,4'-(dihydroxyphenyl)-methane; bis-(2-hydroxyphenyl)methane; bis-(4-hydroxyphenyl)methane; bis-(4-hydroxy-5-nitrophenyl)-methane; 1,1-bis(4-hydroxyphenyl) ethane; 3,3-bis(4-hydroxyphenyl)pentane; 2,2-dihydroxydiphenyl; 2,6-dihydroxynaphthalene; bis-(4-hydroxydiphenyl) sulfone; bis-(3,5-diethyl-4-hydroxyphenyl)sulfone; 2,2-bis-(3,5-dimethyl-4-hydroxyphenyl))propane; 2,4'-dihydroxydiphenyl sulfone; 5'-chloro-2,4'-dihydroxydiphenyl sulfone; bis-(4-hydroxyphenyl)diphenyl sulfone; 4,4'-dihydroxydiphenyl ether; 4,4'-dihydroxy-3,3'-dichlorodiphenyl ether; 4,4'-dihydroxy-2,5-dihydroxydiphenyl ether; and the like.

A variety of additional dihydric phenols which may be employed to provide such carbonate polymers are disclosed in U.S. Patent No. 2,999,835. It is, of course, possible to employ two or more different dihydric phenols or a dihydric phenol in combination with a glycol, a hydroxy terminated polyester, or a dibasic acid in the event that a carbonate copolymer rather than a homopolymer is desired for use in the preparation of the polycarbonate mixtures of the invention.

The carbonate precursor may be either a carbonyl halide, a diaryl carbonate or a bishaloformate. The carbonyl halides include carbonyl bromide, carbonyl chloride, and mixtures thereof. The bishaloformates suitable for use include the bishaloformates of dihydric phenols such as bischloroformates of 2,2-bis(4-hydroxyphenol)propane, 2,2-bis(4-hydroxy-3,5-dichlorophenol)propane, hydroquinone, and the like, or bishaloformates of glycols such as bishaloformates of ethylene glycol, and the like. While all of the above carbonate precursors are useful, carbonyl chloride, also known as phosgene, is preferred.

Also included within the scope of the present invention are the use of high molecular weight thermoplastic randomly branched polycarbonates. These randomly branched polycarbonates are prepared by coreacting a polyfunctional organic compound with the aforedescribed dihydric phenol and carbonate precursor. Representative of the polyfunctional organic compounds useful in making the branched polycarbonates are set forth in U.S. Patent Nos. 3,028,365; 3,334,154; 4,001,184; 4,131,575; all of which are hereby incorporated herein by reference thereto.

The polycarbonate resin components of the compositions of the invention are also represented by so-called "end-capped" polycarbonates. More specifically, it is known that in certain procedures of producing aromatic carbonate polymers from dihydric phenols and a carbonate precursor such as phosgene small amounts of certain molecular weight regulators or chain terminaters can be used to provide end or terminal groups of the carbonate polymer and thereby control the molecular weight of the polycarbonate.

A molecular weight regulator, i.e.; a chain stopper, is generally added to the reactants prior to or during the contacting of them with a carbonate precursor. Useful molecular weight regulators include, but are not limited to, monohydric phenols such as phenol, chroman-I, paratertiarybutylphenol, and the like. Techniques for the control of molecular weight are well known in the art and may be used for controlling the molecular weight of the thermoplastic polycarbonate resins employed as components of the resins of the invention. The preferred aromatic carbonate polymer is homopolymer derived from 2,2-bis(4-hydroxyphenyl)propane (bisphenol A).

Copolyester-carbonate resins are also well known, as are methods of their preparation; see for example the resins and methods of preparation described for example, in the U.S. Patents 3,028,365; 3,334,154; 3,275,601; 3,915,926; 3,030,331; 3,169,121; 3,027,814; and 4,188,314. In general, the preparation may be carried out by interfacial polymerization or phase boundary separation, transesterification, solution polymerization, melt polymerization, interesterification, and like processes. Interfacial polymerization is preferred.

Although the preparative processes may vary, several of the preferred processes typically involve dissolving or dispersing the reactants in a suitable water immiscible solvent medium and contacting the reactants with a carbonate precursor, such as phosgene, in the presence of a suitable catalyst and an aqueous caustic solution under controlled pH conditions. The reactants employed include the polyhydric phenols and the carbonate precursors described above, with any difunctional carboxylic acid conventionally used in the preparation of linear polyesters. Generally, the difunctional carboxylic acids which may be utilized include the aliphatic dicarboxylic acids, the aromatic dicarboxylic acids, and the aliphatic-aromatic dicarboxylic acids. These acids are well known and are disclosed in U.S. Patent No. 3,169,121, which is hereby incorporated herein by reference. Representative of such difunctional carboxylic acids are difunctional carboxylic acids of the formula:-

$$R_1 \text{———} (R_2)_q \text{———} COOH \quad (I)$$

wherein $R_2$ is an alkylene, alkylidene, or cycloaliphatic group; an alkylene, alkylidene or cycloaliphatic group containing ethylenic unsaturation; an aromatic group such as phenylene, biphenylene, and the like: two or more aromatic groups connected through non-aromatic linkages such as alkylene or alkylidene groups; and a divalent aralkyl radical such as tolylene, xylylene, and the like. $R_1$ is either a carboxyl or a hydroxyl group. The letter q represents one where $R_1$ is a hydroxyl group and either zero or one where $R_1$ is a carboxyl group.

Preferred difunctional carboxylic acids employed are the aromatic dicarboxylic acids. Particularly useful aromatic dicarboxylic acids are those represented by the general formula:-

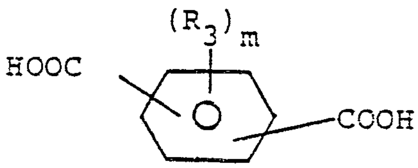

(II)

wherein m is a positive whole integer having a value of from 0 to 4 inclusive; and $R_3$ is independently selected from the group consisting of alkyl radicals, preferably lower alkyl radicals containing from 1 to about 5 carbon atoms.

Mixtures of these difunctional carboxylic acids may be employed as well as single acids. Therefore, where the term difunctional carboxylic acid is used herein it is to be understood that this term includes mixtures of two or more different difunctional carboxylic acids as well as individual carboxylic acids.

Particularly preferred aromatic dicarboxylic acids are isophthalic acid, terephthalic acid, and mixtures thereof. A particularly useful carboxylic acid comprises a mixture of isophthalic acid and terephthalic acid wherein the weight ratio of terephthalic acid to isophthalic acid is in the range of from about 9:1 to about 0.2:9.8.

Rather than utilizing the difunctional carboxylic acid per se, it is possible, and sometimes even preferred, to employ the reactive derivatives of said acid. Illustrative of these reactive derivatives are the acid halides. The preferred acid halides are the acid dichlorides and the acid dibromides. Thus, for example, instead of using isophthalic acid, terephthalic acid, or mixtures thereof, it is possible to employ isophthaloyl dichloride, terephthaloyl dichloride, and mixtures thereof.

Also included within the scope of the instant invention are randomly branched copolyester-carbonate resins wherein a minor amount (typically between 0.05 and 2 mole percent, based on the quantity of dihydric phenol used) of a polyfunctional aromatic compound is a co-reactant with the dihydric phenol in the reaction mixture, comprising also the carbonate precursor and the ester precursor, to provide a thermoplastic randomly branched copolyester-carbonate. These polyfunctional aromatic compounds contain at least three functional groups which may be hydroxyl, carboxyl, carboxylic anhydride, haloformyl, or mixtures thereof. Some illustrative non-limiting examples of these polyfunctional compounds include trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid anhydride, and the like. Other organic polyfunctional compounds useful in making these randomly branched copolyester-carbonates are disclosed in U.S. Patent Nos. 3,635,895 and 4,001,184, both of which are incorporated herein by reference.

Preferably, the polycarbonate or copolyester-carbonate resins will have an intrinsic viscosity (as measured in methylene chloride at a temperature of 25°C) ranging from about 0.30 to about 1.00 deciliters/gram.

Liquid crystals are a class of organic compounds with properties which are intermediate between those of a true liquid and those of a true crystal as they pass from the solid to the liquid state (and vice-versa), i.e.; in a "mesomorphic" state. While in the mesomorphic state they are said to be "liquid crystalline".

The liquid crystals employed as ingredients of the present invention are thermoplastic, i.e.; they exhibit the mesophase characteristics when exposed to a specific temperature range. They may be of the nematic or smectic types, preferably smectic, characterized by their greasy or soapy (lubricant-like) properties. The smectic type of liquid crystal is (with the exception of smectic D) noted for their molecular arrangement or packing in strata or layers, with each structure possessing a characteristic packing between and within the layers. It is believed that this molecular arrangement is responsible for the "lubricant" properties of the liquid crystals used in the present invention.

More specifically, the liquid crystals used as ingredients of the compositions of the invention are macromolecular, i.e.; polymeric, spontaneously ordered analogs of monomeric liquid crystals having extended rectilinear chains with various degrees of crystallinity. Preferred are the injection-moldable liquid crystal polymers such as the high molecular weight copolyesters being comprised of the following divalent radicals:

(A) 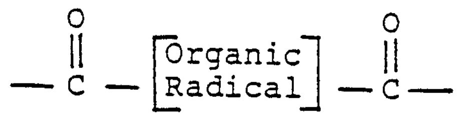

(B) $—OCH_2—CH_2O—$

(C) 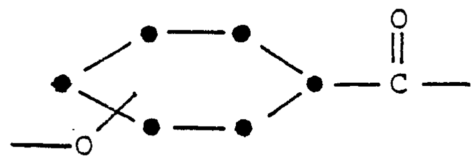

wherein the range of radical (C) is from 20 to 80 mole percent, based on the total moles of radical (A) and radical (B) combined.

These copolyesters are well known as are methods of their preparation; see for example U.S. Patent 3,804,805 incorporated herein by reference thereto. Most preferred are the copolyesters prepared by the acidolysis of poly(ethylene terephthalate) with p-acetoxybenzoic acid and polycondensation through the acetate and carboxyl groups (method of Jackson, Jr. et al., Journal of Polymer Science, Vol. 14, 2043-57, 1976; incorporated herein by reference thereto).

Generally, the resin compositions of the invention comprise from 5 to 20 parts by weight of the polycarbonate or polyester carbonate resin, preferably 5 to 15 parts and most preferably about 10 parts, of the polymeric liquid crystal additive.

The method of the invention may be carried out by a homogeneous blending of the polycarbonate with the polymeric liquid crystal. The blending may be carried out by adding the two resins together and mixing the two components with conventional technique and apparatus. In general, the mixtures may be blended by pre-mixing in conventional mixing rolls, dough mixers, Banbury mixers and the like and blending the pre-mix in an extruder or fluxing it on a mill at an elevated temperature sufficient to achieve a homogeneous melt blending. Upon cooling, the blend may be pelletized and stored for use.

The thermoplastic molding resin compositions of the instant invention may also optionally contain various commonly known and used additives such as, for example, antioxidants; antistatic agents; inert fillers such as glass, talc, mica, and clay; ultraviolet radiation absorbers such as the benzophenones, benzotriazoles, and the like; hydrolytic stabilizers such as the epoxides disclosed in U.S. Patent Nos. 3,489,716, 4,138,379 and 3,839,247, all of which are incorporated herein by reference; color stabilizers such as the organophosphites; thermal stabilizers such as a phosphite; and mold release agents. Flame retardants may also be added.

Some particularly useful flame retardants are the alkali and alkaline earth metal salts of sulfonic acids, such as disclosed in U.S. Patent Nos. 3,933,734; 3,931,100; 3,978,024; 3,948,851; 3,926,980; 3,919,167; 3,909.490; 3,953,396; 3,953,300; 3,917,559; 3,951,910 and 3,940,366, all of which are hereby incorporated by reference.

When employing glass fibers, very good flammability is observed. A flame and drip resistant effective amount of glass fiber is employed in the composition, generally from about 2 to about 10 percent of the composition of polycarbonate and liquid crystal polymer is effective, preferably from about 3 to 6 weight percent.

The resin compositions of the invention may be thermoplastically molded using conventional techniques and apparatus; for example by compression, injection, calendering, extrusion and like techniques.

In preferred compositions of the invention, a conventional and known impact modifier for a polycarbonate resin is added to the compositions of the invention in an impact-modifying proportion.

Representative of such known impact modifiers are selectively hydrogenated linear, sequential or radial teleblock copolymers of a vinyl aromatic compound (A) and $(A')_n$ and an olefinic elastomer (B) of the A-B-A'; A $(B\text{-}A\text{-}B)_nA$; A (B-A) $_nB$; or B $[(A\text{-}B_n)B]_4$ type wherein n is an integer of from 1 to 10, inclusive. These copolymers may be prepared by known methods; see the description given in the U.S. Patent 4,481,331. Commercially available copolymers include for example Kraton G®-1650 and Kraton G®-1651 available from Shell Chemical Company. The Kraton G® has a significant quantity of the residual aliphatic unsaturation removed by selective hydrogenation.

Also commercially available are the Solprenes manufactured by Phillips Petroleum Company.

The radial teleblock copolymers of which the Solprenes are typical examples can be characterized as having at least three polymer branches with each branch of the radial block polymer comprising terminal non-elastomeric segments, e.g. (A) and (A') as defined hereinabove. The branches of the radial block polymer contain a terminal non-elastomeric segment attached to an elastomeric polymer segment, e.g., (B) as defined above. These are described in U.S. Patent No. 3,753,936 and in U.S. Patent No. 3,281,383, both of which are incorporated herein by reference, and they are selectively hydrogenated by procedures known per se. In any event, the term "selective hydrogenation" is used herein to contemplate polymers in which the elastomeric blocks (A) and (A') have been left unhydrogenated, i.e., aromatic.

Further examples of impact modifiers advantageously added to the compositions of the invention are the polyolefins and the acrylate copolymers, particularly the core shell polymers such as Rohm and Haas Acryloid KM330; see U.S. Patent No. 4,096,202.

Also useful as impact modifiers are alkenyl aromatic resins. The alkenyl aromatic resin is a polymer having at least a portion of its units derived from an alkenyl aromatic monomer such as styrene, α-methylstyrene, p-methylstyrene, tert-butyl styrene, bromo-styrene, chlorostyrene, dimethylstyrene, p-methyl-α-methylstyrene, p-chloro-α-methylstyrene, vinyl xylene, vinyl naphthalene and vinyl toluene.

Specific examples of alkenyl aromatic monomers include styrene, chlorostyrene, bromostyrene, alphamethylstyrene, vinyl xylene, vinyl naphthalene and p-methyl styrene.

The alkenyl aromatic resin may be modified with a rubber. The term "rubber" as used in this disclosure is meant to encompass both natural and synthetic forms, and to include polyurethane rubber, ethylene/vinyl acetate rubber, silicone rubber, polyether rubber, polypentenamer rubber and ethylene-propylene-diene rubber; diene rubbers, i.e., homopolymers of conjugated dienes having e.g., 4 to 8 carbon atoms, such as butadiene, isoprene, piperylene and chloroprene; and copolymers of dienes with each other or with styrene, acrylic acid, methacrylic acid, or derivatives thereof (e.g., acrylonitrile, methacrylonitrile, acrylic acid, methacrylic acid, butyl acrylate and methyl methacrylate), or isobutylene. Preferably, the rubber is selected from among butadiene, butadiene/styrene, butadiene/methyl methacrylate, butadiene/butyl acrylate, ethylene/propylene/diene, polypentanamer and butadiene/acrylonitrile rubbers.

An example of a preferred impact modifier for use in the present invention is an EPDM rubber modified polystyrene resin. The term "EPDM" is used in the art to designate rubbery interpolymers of a mixture of monoolefins and a polyene. Preferred types for use in the practice of this invention comprise from about 10 to about 90 mole percent of ethylene, from about 10 to about 90 mole percent of an alpha olefin having 3 to 10 carbon atoms, and from 0.1 to about 10 mole percent of a non-conjugated cyclic or open-chain diene having from 4 to 20 carbon atoms. In the most preferred embodiments, the rubbery interpolymer is derived from ethylene, propylene and a diene selected from 1,4-ethylidene-hexadiene, dicyclopentadiene, and especially, 5-ethylidene-2-norbornene.

The alkenyl aromatic resin that is modified with a rubbery interpolymer may be prepared by dissolving the rubbery interpolymer in the alkenyl aromatic monomer and polymerizing the mixture in the presence of a free radical initiator until 90-100% by weight of the alkenyl aromatic monomer has reacted to form said modified alkenyl aromatic resin. These materials are commercially available, such as the product Taflite 925-01 which is a suspension polymerized EPDM modified, high impact polystyrene that contains about 12% of benzene insoluble rubber and the average rubber particle size is about 8-10 microns. The EPDM component is an ethylene-propylene-ethylidene-norbornene terpolymer.

Rubber modified polystyrenes containing smaller rubber particles may also be used, such as those described in U.S. Patent No. 4,101,504 (EPDM rubber particles having a median diameter of less than about 2 microns).

The preferred modified alkenyl aromatic resins are those made with an EPDM rubbery interpolymer of ethylene, propylene and 5-ethylidene-2-norbornene and styrene. Preferred modi fied alkenyl aromatic resins will include from about 5 to about 20% by weight of rubber interpolymer.

Further examples of impact modifiers which may be added to the compositions of the invention are copolymers made from an olefin, e.g., ethylene, propylene, or the like, copolymerized with one or more of a comonomer comprising a $C_1$-$C_6$ alkyl acrylate, e.g., methyl acrylate, ethyl acrylate, hexyl acrylate and the like; a $C_1$-$C_6$ alkyl methacrylate, e.g., methyl methacrylate, ethyl methacrylate, hexyl methacrylate, and the like; acrylic acid; or methacrylic acid. Especially preferred are the well known copolymers of ethylene with an alkyl ester of acrylic acid. These are disclosed in U.S. Patent No. 2,953,551. Generally, the acrylate or methacrylate portion of the copolymer can range from about 10 to about 30 weight percent. The olefin portion of the copolymer can range from about 70 to about 90 weight percent. The preferred copolymer is an ethylene-ethyl acrylate copolymer in which the weight ratio of the ethylene fraction to the ethyl acrylate fraction is about 4.5 to 1. Suitable olefin-acrylate copolymers, as defined above, can be prepared by methods well known to those skilled in the art or can be obtained commercially. For example, Union Carbide's Bakelite® DPD-6169 ethylene-ethyl acrylate copolymer is advantageous for use in the present invention.

Methods for the preparation of these polymers, both commercial and non-commercial, are abundantly described in the literature and known to those skilled in the art.

An impact-modifying proportion of the known impact modifiers described above is generally within the range of from about 0.05 to 15 parts by weight of the composition, preferably from 3-10 parts, most preferably 4 to 8 parts.

The following examples describe the manner and process of making and using the invention and set forth the best mode contemplated by the inventor for carrying out the invention but are not to be construed as limiting the scope of the invention. All parts are by weight. Test results are in accordance with the following test methods.

Intrinsic Viscosity:

The intrinsic viscosity of polycarbonate resins was measured at a temperature of 25°C in methylene chloride and is reported in deciliters/ gram (dl/g).

Deflection Temperature Under Load (DTUL):

ASTM test method D-648-56 at a load of 18.6 Kg/cm$^2$.

Tensile Strength and Elongation

ASTM test method D-638.

Flexural Modulus

ASTM test method D-790.

Kasha Index (KI)

The procedure for determining the Kasha Index is as follows: 7 grams of resin pellets, dried a minimum of 90 minutes at 125°C are added to a modified Tinius-Olsen T3 melt indexer; the temperature in the indexer is maintained at 300°C and the resin is heated at this temperature for 6 minutes; after 6 minutes the resin is forced through a 1.05 mm radius orifice using a plunger of radius 4.7 mm and an applied force of 7.7 kgs; the time required for the plunger to travel 5.1 cm is measured in centiseconds and this is reported as the Kasha Index (KI). The higher the KI the higher the melt viscosity of the resin and the more viscous the resin and, therefore, the more difficult to process.

Notched Izod Impact Strength

ASTM test method D-256.

## EXAMPLES 1-6

A polycarbonate (PC) prepared by the reaction of phosgene and bisphenol-A and having an intrinsic viscosity of from about 0.46 to about 0.49 deciliters/gram (dl/g) (LEXAN® 145; General Electric Co., Mount Vernon, IN.) was provided. Aliquots of the resin provided were blended with proportions of a thermoplastic, polymeric liquid crystal (LCC 10108, Eastman Kodak, Co., Kingsport, Tenn.) prepared by the acidolysis of polyethylene terephthalate with 60 mole percent p-hydroxybenzoic acid followed by polycondensation through the acetate and the carboxyl groups according to the method of Jackson et al., supra.

The mixtures were uniformly blended together in a laboratory tumbler and the blend extruded at 260°C. The extrudate was pelletized and the pellets were injected molded into test bars at 288°C. The moldings were subjected to tests to determine their physical properties. The blend components and the test results are set forth below in the TABLE 1, below.

TABLE 1 (8CL-6442)

| EXAMPLE NO. | 1 | 2 | 3 | 4 | 5 | 6 |
|---|---|---|---|---|---|---|
| **BLEND COMPONENTS** | | | | | | |
| Lexan 145 (%) | 100 | 90 | 95 | 85 | 85 | – |
| Liquid Crystal (%) LCC 10108 | – | 10 | 5 | 10 | 10 | 100 |
| OCF418AA (%)[a] | – | – | – | 5 | 5 | – |
| LLDPE (LPX-15) (phr)[b] | – | – | – | – | 4 | – |
| KM330[c] | – | – | – | – | – | 4 |
| **PHYSICAL PROPERTIES** | | | | | | |
| Tensile Yield, Kgf/cm² | 633 | 850 | 918 | 820 | 732 | – |
| Tensile Break, Kgf/cm² | 668 | 818 | 825 | 514 | 291 | 1296 |
| Elongation (%) | 110 | 94 | 99 | 13.2 | 15.3 | 15 |
| Flexural Yield, Kgf/cm² | 949 | 1146 | 1054 | 1154 | 993 | 1019 |
| Flexural Modulus, Kgf/cm² x $10^4$ | 2.4 | 3.2 | 2.6 | 3.6 | 3.2 | 7.2 |
| DTUL °C @ 18.6 Kgf/cm² | 135 | 125.6 | 128.8 | 139.6 | 135.6 | 67.7 |
| **NOTCHED IZOD IMPACT STRENGTH (Kfg cm/cm)** | | | | | | |
| 3.2 mm | 65.3 | 17.9 | 16.3 | 12.0 | 15.2 | 12.5 |
| 6.4 mm | 12.5 | 9.8 | 12.5 | 9.2 | 10.9 | 24.4 |
| Weld line strength, Kgf cm/cm | 217 | 99.5 | 203 | 77.2 | 56.6 | – |
| **MELT VISCOSITY** | | | | | | |
| KI, CSEC at 300°C | 3400 | 2220 | 2560 | – | – | 90 |
| UL94 at 3.2 mm | – | V2 | – | VO | – | – |

[a] Owens Corning fiber glass.

[b] Linear low density polyethylene from Exxon.

[c] Core shell n-butylacrylate (80%) methylmethacrylate (19%) obtained from Rohm and Haas.

EXAMPLES 7-9

The general procedure of Examples 1-6, supra, is repeated except that the Lexan® 145 as used therein is replaced with a high-temperature resistant copolyester carbonate resin prepared from bisphenol-A, terephthaloyl chloride, isophthaloyl chloride and phosgene with a composition which is about 80 mole percent ester, the ester being 93 percent isophthalate and 7 percent terephthalate referred to as "PPC" in TABLE 2. The Example 7 is a control and no additives were blended with the copolyestercarbonate, while in the remaining Examples 8 and 9 10 parts by weight of the polymer liquid crystal were added with or without glass fibers. The blend components and the physical properties observed are set forth below in TABLE 2.

TABLE 2 (8CL-6442)

| EXAMPLE NO. | 7 | 8 | 9 |
|---|---|---|---|
| BLEND COMPONENTS | | | |
| PPC (%) | 100 | 90 | 85 |
| LCC 10108 (%) | - | 10 | 10 |
| OCF 418AA (%)[a] | - | - | 5 |
| PHYSICAL PROPERTIES | | | |
| Tensile Yield, Kgf/cm² | 848 | 823 | 829 |
| Tensile Break, Kgf/cm² | 829 | 761 | 622 |
| Elongation (%) | 72 | 71 | 12.3 |
| Flexural Yield, Kgf/cm² | 1068 | 1002 | 1170 |
| Flexural Modulus, Kgf/cm² x $10^4$ | 2.2 | 2.4 | 2.9 |
| DTUL, °C @ 18.6 Kgf/cm² | 162.5 | 153.8 | 162.8 |
| NOTCHED IZOD IMPACT (Kfg/cm/cm) | | | |
| 3.2 mm | 51.4 | 20.1 | 10.9 |
| 6.4 mm | 14.1 | 12.0 | 9.2 |
| Weld line strength, Kgf cm/cm | 178.4 | 82.0 | 75.1 |
| MELT VISCOSITY | | | |
| KI, CSEC at 300°C | 38,940 | 13,160 | - |

[a]Owens Corning glass fiber.

## Claims

1. A thermoplastic resin composition, which comprises;
a thermoplastic aromatic polycarbonate or a copolyester-carbonate; and
a polymeric liquid crystal.

2. The composition of claim 1 where in the polymeric liquid crystal is an injection-moldable copolyester comprised of divalent radicals of the formula:



BAD ORIGINAL

(A) 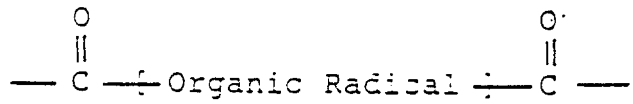

(B) $-OCH_2-CH_2O-$

(C) 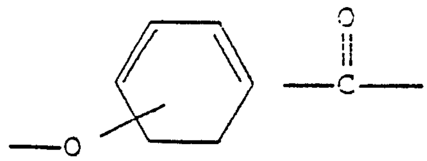

wherein the radical (C) is from 20 to 80 mole percent, based on the total moles of radical (A) and radical (B) combined.

3. The composition of claim 2 wherein the copolyester is the product of acidolysis of poly(ethylene terephthalate) with 60 mole percent of p-acetoxybenzoic acid and polycondensation through the acetate and carboxyl groups.

4. The composition of claim 1 wherein the proportion of polymeric liquid crystal is within the range of from 5 to 20 parts by weight of the polycarbonate or copolyester-carbonate plus the polymeric liquid crystal.

5. The composition of claim 1 which further comprises an impact-modifying proportion of an impact modifier.

6. A method of improving the flexural modulus and heat distortion properties of articles molded from a polycarbonate or copolyester-carbonate resin composition, which comprises admixing into said composition a polymeric liquid crystal.

7. The method of claim 1 wherein from about 2 to 10 parts by weight of glass fiber are blended into the composition.



BAD ORIGINAL